(19) Europäisches Patentamt

European Patent Office

Office européen des brevets

(11) **EP 0 842 222 B1**

(12) **EUROPÄISCHE PATENTSCHRIFT**

(45) Veröffentlichungstag und Bekanntmachung des Hinweises auf die Patenterteilung:
**02.06.1999 Patentblatt 1999/22**

(21) Anmeldenummer: **96925743.5**

(22) Anmeldetag: **12.07.1996**

(51) Int Cl.⁶: **C08L 33/12**, C08L 25/12
// (C08L33/12, 25:12, 51:04, 51:04)

(86) Internationale Anmeldenummer:
**PCT/EP96/03072**

(87) Internationale Veröffentlichungsnummer:
**WO 97/05198 (13.02.1997 Gazette 1997/08)**

(54) **TRANSPARENT, SPANNUNGSRISSBESTÄNDIGE FORMMASSEN MIT EINEM VERBESSERTEN ZÄHIGKEITS-STEIFIGKEITS-VERHÄLTNIS**

TRANSPARENT, STRESS-CRACKING-RESISTANT MOULDING COMPOUNDS WITH IMPROVED TOUGHNESS-RIGIDITY RATIO

MATIERES DE MOULAGE TRANSPARENTES RESISTANT AU FENDILLEMENT PAR CONTRAINTE ET PRESENTANT UN MEILLEUR RAPPORT TENACITE-RIGIDITE

(84) Benannte Vertragsstaaten:
**AT BE CH DE ES FR GB IT LI NL SE**

(30) Priorität: **28.07.1995 DE 19527579**

(43) Veröffentlichungstag der Anmeldung:
**20.05.1998 Patentblatt 1998/21**

(73) Patentinhaber: **BASF AKTIENGESELLSCHAFT**
**67056 Ludwigshafen (DE)**

(72) Erfinder:
• **TIEFENSEE, Kristin**
**D-67368 Westheim (DE)**
• **GÜNTHERBERG, Norbert**
**D-67346 Speyer (DE)**

(56) Entgegenhaltungen:
**EP-A- 0 062 223** **EP-A- 0 603 674**

**Beschreibung**

Die vorliegende Erfindung betrifft thermoplastische Formmassen, enthaltend eine Mischung aus

(A) 15 bis 70 Gew.-% eines Methacrylat-Polymerisates, erhältlich durch Polymerisation einer Mischung, bestehend aus

(A1) 90 bis 100 Gew.-%, bezogen auf (A), Methylmethacrylat, und

(A2) 0 bis 10 Gew.-%, bezogen auf (A), eines $C_1$-$C_8$-Alkylesters der Acrylsäure, und

(B) 10 bis 50 Gew.-% eines Copolymerisates, erhältlich durch Polymerisation einer Mischung, bestehend aus

(B1) 78 bis 88 Gew.-%, bezogen auf (B), eines vinylaromatischen Monomeren und

(B2) 12 bis 22 Gew.-%, bezogen auf (B), eines Vinylcyanids

und

(C) 18 bis 35 Gew.-% eines Pfropfcopolymerisates (C), erhältlich aus

(C1) 50 bis 80 Gew.-% eines Kerns, erhältlich durch Polymerisation eines Monomerengemisches, bestehend aus

(C11) 50 bis 100 Gew.-% eines 1,3-Diens und

(C12) 0 bis 50 Gew.-% eines vinylaromatischen Monomeren

und

(C2) 20 bis 50 Gew.-% einer Pfropfhülle, erhältlich durch Polymerisation eines Monomerengemisches in Gegenwart des Kern (C1), bestehend aus

(C21) 40 bis 100 Gew.-% eines $C_1$-$C_8$-Alkylesters der Methacryl- oder Acrylsäure und

(C22) 0 bis 60 Gew.-% eines vinylaromatischen Monomeren,
mit einer mittleren Teilchengröße $(d_{50})$-C des Pfropfcopolymerisats (C) von 25 bis 60 nm, und

(D) 2 bis 15 Gew.-% eines Pfropfcopolymerisates (D), erhältlich aus

(D1) 50 bis 80 Gew.-% eines Kernes, erhältlich durch Polymerisation eines Monomerengemisches, bestehend aus

(D11) 50 bis 100 Gew.-% eines 1,3-Diens und

(D12) 0 bis 50 Gew.-% eines vinylaromatischen Monomeren

und

(D2) 20 bis 50 Gew.-% einer Pfropfhülle aus

(D21) 40 bis 100 Gew.-% eines $C_1$-$C_8$-Alkylesters der Methacryl- oder Acrylsäure und

(D22) 0 bis 60 Gew.-% eines vinylaromatischen Monomeren
mit einer mittleren Teilchengröße $(d_{50})$-D des Pfropfcopolymerisate (D) von 90 bis 300 nm und mit der weiteren Maßgabe, daß das Verhältnis der mittleren Teilchengrößen $(d_{50})$-C zu $(d_{50})$-D im Bereich von 2: 1 bis 5:1 gehalten wird und

(E) gegebenenfalls üblichen Zusatzstoffen in Mengen bis zu 20 Gew.-%, bezogen auf die Summe der Komponenten A, B, C und D, wobei sich die Gew.-Prozentangaben von A, B, C und D auf 100 addieren und die Differenz zwischen dem Brechungsindex der Komponente C und D und dem des Gemisches der Komponenten A, B und gegebenenfalls E weniger als 0,005 beträgt.

Des weiteren betrifft die Erfindung ein Verfahren zur Herstellung des erfindungsgemäßen thermoplastischen Formmassen, deren Verwendung und die daraus erhältlichen Formkörper.

Die EP-A 62 223 beschreibt hochglanzende, transparente, schlagzähe, thermoplastische Formmassen aus einem harten Methylmethacrylat-Polymerisat, einem harten Styrol/Acrylnitril-Polymerisat und einem weichen Pfropfcopolymerisat von Alkyl(meth)acrylat und gegebenenfalls Styrol auf einem Kautschuk. Die Formmassen enthalten sogenannte Kern/Schale-Partikel mit einer Teilchengröße von weniger als 0,2 μm zur Verbesserung der Schlagzähigkeit.

Das Zähigkeits-Steifigkeits-Verhältnis derartiger thermoplastischer Formmassen ist aber für einige Anwendungen, insbesondere im Kosmetikbereich noch unzureichend. Für verschiedene Formmassen im Kosmetikbereich benötigt man nämlich ein spannungsrißbeständiges Material, welches neben einer hohen Transparenz auch ein ausgewogenes Zähigkeits-Steifigkeits-Verhältnis aufweist.

Eine Möglichkeit, die Schlagzähigkeit von thermoplastischen Polymerisaten zu erhöhen, besteht darin, ein als "Modifier" verwendetes Pfropfcopolymerisat mit Hilfe eines Latex aus einem Copolymerisat aus Ethylacrylat und Methacrylsäure chemisch zu agglomerieren (EP-A 347 726). Dabei beobachtet man eine Erhöhung des mittleren Teilchendurchmessers von 90 nm auf 200 bis 600 nm. Nachteilig an dieser chemischen Agglomeration ist die breite Teilchengrößenverteilung des agglomerierten Anteils, die nach Pfropfung des teilagglomerierten Latex zur Trübung und zur Gelbfärbung des Polymerisats führen kann. Außerdem gestaltet sich das genaue Einstellen des agglomerierten Anteils als sehr schwierig.

Weiterhin ist aus der GB-A 2 156 365 bekannt, die Schlagzähigkeit von thermoplastischen Polymerisaten dadurch zu steigern, daß man diese mit Hilfe von Metallsalzen agglomeriert. Dabei kann es aber zu Salzeinschlüssen im Polymerisat kommen, welche dessen Transparenz beeinträchtigt.

Der vorliegenden Erfindung lag daher die Aufgabe zugrunde, den geschilderten Nachteilen abzuhelfen und verbesserte transparente Formmassen zu entwickeln, die spannungsrißbeständig und schlagzäh sind und darüber hinaus gute optische Eigenschaften aufweisen.

Demgemäß wurden die eingangs definierten thermoplastischen Formmassen gefunden.

Des weiteren wurde ein Verfahren zu deren Herstellung, ihre Verwendung zur Herstellung von Formkörpern sowie Formkörper, hergestellt aus den erfindungsgemäßen thermoplastischen Formmassen, gefunden.

Die erfindungsgemäßen thermoplastischen Formmassen enthalten

(A) 15 bis 70 Gew.-%, vorzugsweise von 25 bis 60 Gew.-%, eines Methacrylat-Polymerisates, erhältlich durch Polymerisation einer Mischung, bestehend aus

    (A1) 90 bis 100 Gew.-%, vorzugsweise von 93 bis 97 Gew.-% bezogen auf (A), Methylmethacrylat, und

    (A2) 0 bis 10 Gew.-%, vorzugsweise von 3 bis 7 Gew.-%, bezogen auf (A), eines $C_1$-$C_8$-Alkylesters der Acrylsäure,

(B) 10 bis 50 Gew.-%, vorzugsweise von 10 bis 40 Gew.-%, eines Copolymerisates, erhältlich durch Polymerisation einer Mischung, bestehend aus

    (B1) 78 bis 88 Gew.-%, vorzugsweise von 78 bis 84 Gew.-%, bezogen auf (B), eines vinylaromatischen Monomeren und

    (B2) 12 bis 22 Gew.-%, vorzugsweise von 16 bis 22 Gew.-%, bezogen auf (B), eines Vinylcyanids

und

(C) 18 bis 35 Gew.-%, vorzugsweise von 20 bis 30 Gew.-%, eines Pfropfcopolymerisates, erhältlich aus

    (C1) 50 bis 80 Gew.-%, vorzugsweise von 55 bis 70 Gew.-%, eines Kerns, erhältlich durch Polymerisation eines Monomerengemisches, bestehend aus

        (C11) 50 bis 100 Gew.-%, vorzugsweise von 60 bis 80 Gew.-%, eines 1,3-Diens und

(C12) 0 bis 50 Gew.-%, vorzugsweise von 20 bis 40 Gew.-%, eines vinylaromatischen Monomeren

und

(C2) 20 bis 50 Gew.-%, vorzugsweise von 30 bis 45 Gew.-%, einer Pfropfhülle, erhältlich durch Polymerisation eines Monomerengemisches in Gegenwart des Kern (C1), bestehend aus

(C21) 40 bis 100 Gew.-%, vorzugsweise von 50 bis 80 Gew.-%, eines $C_1$-$C_8$-Alkylesters der Methacryl- oder Acrylsäure und

(C22) 0 bis 60 Gew.-%, vorzugsweise von 20 bis 50 Gew.-%, eines vinylaromatischen Monomeren,

mit einer mittleren Teilchengröße $(d_{50})$-C des Pfropfcopolymerisats (C) von 25 bis 60 nm, insbesondere von 30 bis 55 nm und besonders bevorzugt von 35 bis 55 nm, und

(D) 2 bis 15 Gew.-%, vorzugsweise von 4 bis 10 Gew.-%, eines Pfropfcopolymerisats (D), erhältlich aus

(D1) 50 bis 80 Gew.-%, vorzugsweise von 55 bis 70 Gew.-%, eines Kerns, erhältlich durch Polymerisation eines Monomerengemisches, bestehend aus

(D11) 50 bis 100 Gew.-%, vorzugsweise von 60 bis 80 Gew.-%, eines 1,3-Diens und

(D12) 0 bis 50 Gew.-%, vorzugsweise von 20 bis 40 Gew.-%, eines vinylaromatischen Monomeren

und

(D2) 20 bis 50 Gew.-%, vorzugsweise von 30 bis 45 Gew.-%, einer Pfropfhülle, erhältlich durch Polymerisation eines Monomerengemisches in Gegenwart des Kern (D1), bestehend aus

(D21) 40 bis 100 Gew.-%, vorzugsweise von 50 bis 80 Gew.-%, eines $C_1$-$C_8$-Alkylesters der Methacryl- oder Acrylsäure und

(D22) 0 bis 60 Gew.-%, vorzugsweise von 20 bis 50 Gew.-%, eines vinylaromatischen Monomeren, mit einer mittleren Teilchengröße $(d_{50})$-D des Pfropfcopolymerisats (D) von 90 bis 300 nm, insbesondere von 100 bis 250 nm und besonders bevorzugt von 120 bis 200 nm und mit der weiteren Maßgabe, daß das Verhältnis der mittleren Teilchengrößen $(d_{50})$-C des Pfropfcopolymerisats (C) zu den mittleren Teilchengrößen $(d_{50})$-D des Pfropfcopolymerisats (D) im Bereich von 2:1 bis 5:1, insbesondere im Bereich von 3:1 bis 5:1 gehalten wird,

und

(E) gegebenenfalls üblichen Zusatzstoffen in Mengen von bis zu 20 Gew.-%, vorzugsweise von 0 bis 10 Gew.-%, bezogen auf die Summe der Komponenten A, B, C und D, wobei sich die Gew.-Prozentangaben von A, B, C und D auf 100 addieren und die Differenz zwischen dem Brechungsindex der Komponente C und D und dem des Gemisches der Komponenten A, B und gegebenenfalls E weniger als 0,005 beträgt.
Die Methacrylat-Polymerisate (A) sind entweder Homopolymerisate aus Methylmethacrylat (MMA) oder Copolymerisate aus MMA mit bis zu 10 Gew.-%, bezogen auf (A), eines $C_1$-$C_8$-Alkylesters der Acrylsäure.

Als $C_1$-$C_8$-Alkylester der Acrylsäure (Komponente A2) kann man Methylacrylat, Ethylacrylat, Propylacrylat, n-Butylacrylat, n-Pentylacrylat, n-Hexylacrylat, n-Heptylacrylat, n-Octylacrylat und 2-Ethylhexylacrylat sowie Mischungen davon einsetzen, vorzugsweise Methylacrylat, n-Butylacrylat, 2-Ethylhexylacrylat oder Mischungen davon, besonders bevorzugt Methylacrylat.

Die Methylmethacrylat-(MMA)-Polymerisate können durch Substanz-, Lösung- oder Perlpolymerisation nach bekannten Methoden hergestellt werden (siehe beispielsweise Kunststoff-Handbuch, Band IX, "Polymethacrylate", Vieweg/Esser, Carl-Hanser-Verlag 1975) und sind im Handel erhältlich. Bevorzugt setzt man Methacrylat-Polymerisate ein, deren Gewichtsmittel-Werte $M_w$ der Molmassen im Bereich von 60.000 bis 300.000 liegen (bestimmt durch Lichtstreuung in Chloroform).

Die Komponente (B) ist ein Copolymerisat aus einem vinylaromatischen Monomeren (B1) und Vinylcyanid (B2).

Als vinylaromatische Monomere (Komponente B1) kann man Styrol, ein- bis dreifach mit $C_1$-$C_8$-Alkylresten substituiertes Styrol wie p-Methylstyrol oder tert.-Butylstyrol sowie $\alpha$-Methylstyrol, bevorzugt Styrol, einsetzen.

Als Vinylcyanid (Komponente B2) kann man Acrylnitril und/oder Methacrylnitril, bevorzugt Acrylnitril, einsetzen.

Außerhalb des oben angegebenen Bereiches der Zusammensetzung der Komponente (B) erhält man üblicherweise bei Verarbeitungstemperaturen über 240°C trübe Formmassen, die Bindenahte aufweisen.

Die Copolymerisate (B) können nach allen bekannten Verfahren hergestellt werden, wie durch Substanz-, Lösung-, Suspensions- oder Emulsions-Polymerisation, bevorzugt durch Lösungspolymerisation (siehe GB-A 14 72 195). Bevorzugt sind Copolymerisate (B) mit Molmassen $M_w$ (Gewichtsmittel) von 60 000 bis 300 000, bestimmt durch Lichtstreuung in Dimethylformamid.

Als Komponente (C) wird ein Pfropfcopolymerisat verwendet, aus einem Kern (C1) und einer darauf aufgebrachten Pfropfhülle (C2).

Der Kern (C1) stellt die Pfropfgrundlage dar und weist einen Quellungsindex Q1 von 15 bis 35 %, insbesondere von 20 bis 30 % auf, bestimmt durch Quellungsmessung in Toluol bei Raumtemperatur.

Als 1,3-Dien (Komponente C11) des Kerns des Pfropfcopolymerisats (Komponente C1) kann man Butadien und/oder Isopren einsetzen.

Als vinylaromatisches Monomer (Komponente C12) kann man Styrol oder ein in $\alpha$-Stellung oder vorzugsweise am Kern mit einer (oder am Kern auch mehreren) $C_1$-$C_8$-Alkylgruppe(n), vorzugsweise Methyl, substituiertes Styrol einsetzen.

Bevorzugt weist der Kern des Pfropfcopolymerisats eine Glasübergangstemperatur von kleiner als 0°C auf und weist bevorzugt eine mittlere Teilchengröße von kleiner als 200 nm, besonders bevorzugt von 30 bis 150 nm, auf. Üblicherweise stellt man den Kern durch Emulsionspolymerisation her (siehe beispielsweise Encyclopedia of Polymer Science and Engineering, Vol. 1, S. 401 ff).

Auf den Kern (C1) wird die Pfropfhülle (C2) aufgebracht, welche die Monomere (C21) und gegebenenfalls (C22) enthält.

Als $C_1$-$C_8$-Alkylester der Methacryl- oder Acrylsäure (Komponente C21) verwendet man erfindungsgemäß Methylmethacrylat ("MMA"), Ethylmethacrylat, n-, i-Propylmethacrylat, n-Butylmethacrylat, Isobutylmethacrylat, sek.-Butylmethacrylat, tert.-Butylmethacrylat, Pentylmethacrylat, Hexylmethacrylat, Heptylmethacrylat, Octylmethylacrylat oder 2-Ethylhexylmethacrylat, wobei Methylmethacrylat besonders bevorzugt ist, sowie Mischungen dieser Monomere, Methylacrylat ("MA"), Ethylacrylat, Propylacrylat, n-Butylacrylat, Isobutylacrylat, sek.-Butylacrylat, tert.-Butylacrylat, Pentylacrylat, Hexylacrylat, Heptylacrylat, Octylacrylat oder 2-Ethylhexylacrylat, wobei n-Butylacrylat besonders bevorzugt ist, sowie Mischungen dieser Monomere untereinander als auch mit den Methacrylaten.

Als vinylaromatische Monomere (Komponente C22) kann man Styrol, ein- bis dreifach mit $C_1$-$C_8$-Alkylresten substituiertes Styrol wie p-Methylstyrol oder tert.-Butylstyrol sowie $\alpha$-Methylstyrol, 5 bevorzugt Styrol, einsetzen.

Bei Verwendung von mehr als einem Monomeren für die Pfropfhülle kann ein Schalenaufbau erstrebenswert sein. Die verschiedenen Schalen können dabei verschiedene Zusammensetzungen besitzen. Dies wird im allgemeinen erzielt, indem verschiedene Monomeren(mischungen) zu verschiedenen Zeiten bei der Polymerisation zugegeben werden.

Die Herstellung der Pfropfhülle (C2) erfolgt üblicherweise in Gegenwart des Kerns (C1) beispielsweise nach dem Verfahren beschrieben in Encyclopedia of Polymer Science and Engineering, Vol. 1, S. 401 ff.

Das Pfropfcopolymerisat (C) kann z.B. durch Sprühtrocknung oder durch Koagulation isoliert werden. Derartige Produkte sind handelsüblich und weisen bevorzugt eine mittlere Teilchengröße $(d_{50})$-C im Bereich von 25 bis 60 nm, besonders bevorzugt von 30 bis 55 nm, auf.

Als Komponente (D) setzt man ebenfalls ein Pfropfcopolymerisat aus einem Kern (D1) und einer darauf aufgebrachten Pfropfhülle (D2) ein.

Die Komponente (D) enthält Comonomere, die zu den gleichen Verbindungsklassen gehören wie die in dem Pfropfcopolymerisat (C) verwendeten Comonomere, so daß bezüglich ihrer Herstellung und ihres genauen Aufbaus auf unsere Erläuterungen über die Komponente (C) verwiesen werden kann.

Das Pfropfcopolymerisat (D) kann ebenfalls durch Sprühtrocknung oder durch Koagulation isoliert werden. Derartige Produkte sind handelsüblich und weisen eine mittlere Teilchengröße $(d_{50})$-D im Bereich von 90 bis 300 nm, bevorzugt von 100 bis 250 nm und insbesondere von 120 bis 200 nm auf.

Die Komponenten (C) und (D) können innerhalb der vorgegebenen Verbindungsklassen jeweils gleiche oder unterschiedliche Comonomere enthalten. Ihre Quellungsindices, bestimmt in Toluol, liegen zwischen 10 und 30, bevorzugt zwischen 12 und 20. Der Gelgehalt der Komponenten (C) und (D), bestimmt durch Quellung in Toluol, liegt zwischen 85 und 92 %, bevorzugt zwischen 88 und 92 %.

Als Zusatzstoffe (E) kommen bevorzugt solche in Betracht, die sich in den Komponenten A und B klar lösen. Beispielsweise seien genannt: Farbstoffe, Stabilisatoren, Schmiermittel und Antistatika.

Das Vermischen der Komponenten A, B, C, D und gewünschtenfalls E nimmt man üblicherweise in der Schmelze bei Temperaturen im Bereich von 200 bis 300°C, vorzugsweise von 220 bis 280°C, vor.

Eine Voraussetzung für die Transparenz der erfindungsgemäßen Formmassen ist, daß die Differenz zwischen dem Brechungsindex der (weichen) Komponenten C und D und dem des Gemisches der (harten) Komponenten A, B und gegebenenfalls der Füllstoffe E weniger als 0,005 beträgt. Der Brechungsindex des Gemisches der harten Komponenten A, B und gegebenenfalls E ergibt sich durch Linearkombination aus den Brechungszahlen der Einzelkomponenten mit deren Gewichtsanteilen. Bei vorgegebenem Brechungsindex der Weichkomponenten C und D wird der Brechungsindex der Hartkomponente durch geeignete Wahl des Verhältnisses (A+E):B angeglichen. Eine weitere wesentliche Voraussetzung für die Unabhängigkeit der Transparenz von der Verarbeitungstemperatur ist die Einhaltung der angegebenen Zusammensetzung der einzelnen Komponenten und die Verträglichkeit der einzelnen Komponenten untereinander.

Aus den erfindungsgemäßen Formmassen können hauptsächlich durch Spritzgießen oder Blasen Formteile hergestellt werden. Man kann die Formmassen auch verpressen, kalandrieren, extrudieren oder vakuumformen. Sie können überall dort eingesetzt werden, wo ein spannungsrißbeständiges Material mit einer hohen Transparenz und einem ausgewogenen Zähigkeits-Steifigkeits-Verhältnis benötigt wird, beispielsweise im Kosmetikbereich.

Die Verarbeitungsbreite der erfindungsgemäßen, transparenten, thermoplastischen Formmassen oberhalb 200°C ist nicht durch Unverträglichkeitserscheinungen eingeschränkt. Die Mischungen lassen sich zwischen 200 und 300°C ohne Einbußen in der Transparenz, ohne merkbare Vergilbung und ohne eine lästige Geruchsbildung verarbeiten. Im Spritzguß verarbeitete Formteile zeigen keinerlei Bindenahtmarkierungen und zeichnen sich u.a. durch eine hohe Transparenz aus. Die erfindungsgemäßen thermoplastischen Formmassen weisen außerdem eine hohe Zähigkeit bei guter Steifigkeit und gute optische Eigenschaften auf.

Beispiele

Die in den Beispielen und Vergleichsversuchen genannten Verhältnisse und Prozente beziehen sich auf das Gewicht.

Der Brechungsindex $n_D^{25}$ wurde mit einem Abbé-Refraktometer nach der Methode zur Messung der Brechungsindizes bei festen Körpern bestimmt (s. Ullmanns Encyklopadie der technischen Chemie, Band 2/1, S. 486, Herausgeber E. Foerst; Urban & Schwarzenberg, München-Berlin 1961).

Die multiaxiale Zähigkeit Wg wurde nach DIN 53 443 bestimmt, die Steifigkeit (E-Modul) nach DIN 53 475.

Die mittlere Teilchengröße $(d_{50})$-C bzw. $(d_{50})$-D und die Teilchengrößenverteilung wurden aus der integralen Massenverteilung bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z, und Z.-Polymere 250 (1972), Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durchmesser als der $d_{50}$-Wert.

Der Yellownessindex oder Gelbwertindex YI basiert auf Farbmaßzahlen, die aus dem Transmissionsspetrum gemäß DIN 5036 berechnet werden. Dabei wird die Lichtart D65 und der Großfeldnormalbeobachter zugrundegelegt.

Die Bestimmung des Streulichtanteils erfolgte ebenfalls nach DIN 5036.

Für das Beispiel und die Vergleichsbeispiele A bis D wurden die nachfolgend näher bezeichneten Polymerisate verwendet:

A    Copolymerisat, hergestellt aus Methylmethacrylat (MMA) und Methylacrylat (MA) im Verhältnis 94:6 ($n_D^{25} = 1,492$, $M_W = 110.000$ g/mol);

B    Copolymerisat, hergestellt aus Styrol (S) und Acrylnitril (AN) im Verhältnis 81:19 ($M_W = 250.000$ g/mol, $n_D^{25} = 1,575$);

C    Pfropfcopolymerisat, hergestellt aus 45 Gew.-Teilen einer Mischung, bestehend aus 51 Gew.-Teilen MMA, 44 Gew.-Teilen Styrol und 5 Gew.-Teilen n-Butylacrylat, polymerisiert in Gegenwart von 55 Gew.-Teilen eines Kerns, erhältlich durch Polymerisation von 72 Gew.-Teilen Butadien und 28 Gew.-Teilen Styrol ($n_D^{25} = 1,5402$, $d_{50\text{-}C} = 110$ nm);

C¹   Pfropfcopolymerisat, hergestellt aus 45 Gew.-Teilen einer Mischung, bestehend aus 51 Gew.-Teilen MMA, 44 Gew.-Teilen Styrol und 5 Gew.-Teilen n-Butylacrylat, polymerisiert in Gegenwart von 55 Gew.-Teilen eines Kerns, erhältlich durch Polymerisation von 72 Gew.-Teilen Butadien und 28 Gew.-Teilen Styrol ($n_D^{25}$ = 1,5402, $d_{50\text{-}C}$ = 53 nm),

D$^1$  Pfropfcopolymerisat, hergestellt aus 45 Gew.-Teilen einer Mischung, bestehend aus 51 Gew.-Teilen MMA, 44 Gew.-Teilen Styrol und 5 Gew.-Teilen n-Butylacrylat, polymerisiert in Gegenwart von 55 Gew.-Teilen eines Kerns, erhältlich durch Polymerisation von 72 Gew.-Teilen Butadien und 28 Gew.-Teilen Styrol (($n_D^{25}$ = 1,5402, $d_{50\text{-}D}$ = 195 nm);

D$^2$  Pfropfcopolymerisat, hergestellt aus 45 Gew.-Teilen einer Mischung, bestehend aus 51 Gew.-Teilen MMA, 44 Gew.-Teilen Styrol und 5 Gew.-Teilen n-Butylacrylat, polymerisiert in Gegenwart von 55 Gew.-Teilen eines Kerns, erhältlich durch Polymerisation von 72 Gew.-Teilen Butadien und 28 Gew.-Teilen Styrol (($n_D^{25}$ = 1,5402, $d_{50\text{-}D}$ = 100 nm);

D$^3$  Pfropfcopolymerisat, hergestellt aus 45 Gew.-Teilen einer Mischung, bestehend aus 51 Gew.-Teilen MMA, 44 Gew.-Teilen Styrol und 5 Gew.-Teilen n-Butylacrylat, polymerisiert in Gegenwart von 55 Gew.-Teilen eines Kerns, erhältlich durch Polymerisation von 72 Gew.-Teilen Butadien und 28 Gew.-Teilen Styrol (($n_D^{25}$ = 1,5402, $d_{50\text{-}D}$ = 310 nm).

Tabelle

| | Komponenten [in Gew.-%] | | | | Verhältnis der Teilchen-größen $d_{50}\text{-}C/d_{50\text{-}D}$ | Schlag-zähigkeit [Wg] | Steifig-keit [E-Modul] | Gelbwert-index [YI] | Streulicht-anteil [%] |
|---|---|---|---|---|---|---|---|---|---|
| | A | B | C | D | | | | | |
| Vgl. Beisp. A | A[28,5] | B[35,5] | C[36,0] | – | – | 12,4 | 1970 | 4,9 | 3,8 |
| Beispiel | A[28,5] | B[35,5] | C$^1$[28,8] | D$^1$[7,2] | 3,7 | 19,8 | 2000 | 2,5 | 2,9 |
| Vgl. Beisp. B | A[28,5] | B[35,5] | C$^1$[28,8] | D$^2$[7,2] | 1,9 | 6,2 | 2010 | 3,7 | 3,5 |
| Vgl. Beisp. C | A[28,5] | B[35,5] | C$^1$[28,8] | D$^3$[7,2] | 5,8 | 21,1 | 1950 | 4,0 | 5,3 |

Aus einem Vergleich zwischen dem erfindungsgemäßen Beispiel und den Vergleichsbeispielen A bis C geht u.a. hervor, daß die erfindungsgemäße Verwendung von Pfropfcopolymerisaten C und D mit genau definierten mittleren Teilchengrößen $d_{50-C}$ und $d_{50-D}$ sowie einem spezifischen Verhältnis der Teilchengrößen $d_{50-C}/d_{50-D}$ zu Formmassen mit einer geringeren Gelbfärbung und einer hohen Transparenz [geringer Streulichtanteil] führt. Darüber hinaus zeichnen sich die erfindungsgemäßen thermoplastischen Formmassen durch ein verbessertes Zähigkeits-Steifigkeits-Verhältnis aus.

**Patentansprüche**

1.  Thermoplastische Formmassen, enthaltend eine Mischung aus

    (A) 15 bis 70 Gew.-% eines Methacrylat-Polymerisates, erhältlich durch Polymerisation einer Mischung, bestehend aus

    (A1) 90 bis 100 Gew.-%, bezogen auf (A), Methylmethacrylat, und

    (A2) 0 bis 10 Gew.-%, bezogen auf (A), eines $C_1$-$C_8$-Alkylesters der Acrylsäure, und

    (B) 10 bis 50 Gew.-% eines Copolymerisates, erhältlich durch Polymerisation einer Mischung, bestehend aus

    (B1) 78 bis 88 Gew.-%, bezogen auf (B), eines vinylaromatischen Monomeren und

    (B2) 12 bis 22 Gew.-%, bezogen auf (B), eines Vinylcyanids

    und

    (C) 18 bis 35 Gew.-% eines Pfropfcopolymerisates (C), erhältlich aus

    (C1) 50 bis 80 Gew.-% eines Kerns, erhältlich durch Polymerisation eines Monomerengemisches, bestehend aus

    (C11) 50 bis 100 Gew.-% eines 1,3-Diens und

    (C12) 0 bis 50 Gew.-% eines vinylaromatischen Monomeren

    und

    (C2) 20 bis 50 Gew.-% einer Pfropfhülle, erhältlich durch Polymerisation eines Monomerengemisches in Gegenwart des Kern (C1), bestehend aus

    (C21) 40 bis 100 Gew.-% eines $C_1$-$C_8$-Alkylesters der Methacryl- oder Acrylsäure und

    (C22) 0 bis 60 Gew.-% eines vinylaromatischen Monomeren,

    mit einer mittleren Teilchengröße $(d_{50})$-C des Pfropfcopolymerisats (C) von 25 bis 60 nm, und

    (D) 2 bis 15 Gew.-% eines Pfropfcopolymerisates (D), erhältlich aus

    (D1) 50 bis 80 Gew.-% eines Kernes, erhältlich durch Polymerisation eines Monomerengemisches, bestehend aus

    (D11) 50 bis 100 Gew.-% eines 1,3-Diens und

    (D12) 0 bis 50 Gew.-% eines vinylaromatischen Monomeren

    und

(D2) 20 bis 50 Gew.-% einer Pfropfhülle aus

(D21) 40 bis 100 Gew.-% eines $C_1$-$C_8$-Alkylesters der Methacryl- oder Acrylsäure und

(D22) 0 bis 60 Gew.-% eines vinylaromatischen Monomeren

mit einer mittleren Teilchengröße $(d_{50})$-D des Pfropfcopolymerisate (D) von 90 bis 300 nm und mit der weiteren Maßgabe, daß das Verhältnis der mittleren Teilchengrößen $(d_{50})$-C zu $(d_{50})$-D im Bereich von 2:1 bis 5:1 gehalten wird und

(E) gegebenenfalls üblichen Zusatzstoffen in Mengen von bis zu 20 Gew.-%, bezogen auf die Summe der Komponenten A, B, C und D, wobei sich die Gew.-Prozentangaben von A, B, C und D auf 100 addieren und die Differenz zwischen dem Brechungsindex der Komponente C und D und dem des Gemisches der Komponenten A, B und gegebenenfalls E weniger als 0,005 beträgt.

2.  Thermoplastische Formmassen nach Anspruch 1, wobei das Pfropfcopolymerisat (C) eine mittlere Teilchengröße $(d_{50})$-C von 30 bis 55 nm aufweist.

3.  Thermoplastische Formmassen nach den Ansprüchen 1 oder 2, wobei das Pfropfcopolymerisat (D) eine mittlere Teilchengröße $(d_{50})$-D von 100 bis 250 nm aufweist.

4.  Thermoplastische Formmassen nach den Ansprüchen 1 bis 3, wobei das Verhältnis der mittleren Teilchengrößen $(d_{50})$-C zu $(d_{50})$-D im Bereich von 3:1 bis 5:1 gehalten wird.

5.  Verfahren zur Herstellung der thermoplastischen Formmassen gemäß einem der Ansprüche 1 bis 4, dadurch gekennzeichnet, daß man

(A) 15 bis 70 Gew.-% eines Methacrylat-Polymerisates, erhältlich durch Polymerisation einer Mischung, bestehend aus

(A1) 90 bis 100 Gew.-%, bezogen auf (A), Methylmethacrylat, und

(A2) 0 bis 10 Gew.-%, bezogen auf (A), eines $C_1$-$C_8$-Alkylesters der Acrylsäure, und

(B) 10 bis 50 Gew.-% eines Copolymerisates, erhältlich durch Polymerisation einer Mischung, bestehend aus

(B1) 78 bis 88 Gew.-%, bezogen auf (B), eines vinylaromatischen Monomeren und

(B2) 12 bis 22 Gew.-%, bezogen auf (B), eines Vinylcyanids

und

(C) 18 bis 35 Gew.-% eines Pfropfcopolymerisates (C), erhältlich aus

(C1) 50 bis 80 Gew.-% eines Kerns, erhältlich durch Polymerisation eines Monomerengemisches, bestehend aus

(C11) 50 bis 100 Gew.-% eines 1,3-Diens und

(C12) 0 bis 50 Gew.-% eines vinylaromatischen Monomeren

und

(C2) 20 bis 50 Gew.-% einer Pfropfhülle, erhältlich durch Polymerisation eines Monomerengemisches in Gegenwart des Kern (C1), bestehend aus

(C21) 40 bis 100 Gew.-% eines $C_1$-$C_8$-Alkylesters der Methacryl- oder Acrylsäure und

(C22) 0 bis 60 Gew.-% eines vinylaromatischen Monomeren,

mit einer mittleren Teilchengröße $(d_{50})$-C des Pfropfcopolymerisats (C) von 25 bis 60 nm, und

(D) 2 bis 15 Gew.-% eines Pfropfcopolymerisates (D), erhältlich aus

(D1) 50 bis 80 Gew.-% eines Kernes, erhältlich durch Polymerisation eines Monomerengemisches, bestehend aus

(D11) 50 bis 100 Gew.-% eines 1,3-Diens und

(D12) 0 bis 50 Gew.-% eines vinylaromatischen Monomeren

und

(D2) 20 bis 50 Gew.-% einer Pfropfhülle aus

(D21) 40 bis 100 Gew.-% eines $C_1$-$C_8$-Alkylesters der Methacryl- oder Acrylsäure und

(D22) 0 bis 60 Gew.-% eines vinylaromatischen Monomeren

mit einer mittleren Teilchengröße $(d_{50})$-D des Pfropfcopolymerisate (D) von 90 bis 300 nm und mit der weiteren Maßgabe, daß das Verhältnis der mittleren Teilchengrößen $(d_{50})$-C zu $(d_{50})$-D im Bereich von 2:1 bis 5:1 gehalten wird und

(E) gegebenenfalls üblichen Zusatzstoffen in Mengen von bis zu 20 Gew.-%, bezogen auf die Summe der Komponenten A, B, C und D, wobei sich die Gew.-Prozentangaben von A, B, C und D auf 100 addieren und die Differenz zwischen dem Brechungsindex der Komponente C und D und dem des Gemisches der Komponenten A, B und gegebenenfalls E weniger als 0,005 beträgt, bei Temperaturen im Bereich von 200 bis 300°C mischt.

6. Verwendung der thermoplastischen Formmassen gemäß Anspruch 5 zur Herstellung von Formkörpern.

7. Formkörper, erhältlich durch die Verwendung gemäß Anspruch 6.

## Claims

1. A thermoplastic molding material containing a mixture of

(A) from 15 to 70 % by weight of a methacrylate polymer obtainable by polymerization of a mixture consisting of

(A1) from 90 to 100 % by weight, based on (A), of methyl methacrylate and

(A2) from 0 to 10 % by weight, based on (A), of a $C_1$-$C_8$-alkyl ester of acrylic acid and

(B) from 10 to 50 % by weight of a copolymer obtainable by polymerization of a mixture consisting of

(B1) from 78 to 88 % by weight, based on (B), of a vinylaromatic monomer and

(B2) from 12 to 22 % by weight, based on (B), of a vinyl cyanide

and

(C) from 18 to 35 % by weight of a graft copolymer (C) obtainable from

(C1) from 50 to 80 % by weight of a core obtainable by polymerization of a monomer mixture consisting of

(C11) from 50 to 100 % by weight of a 1,3-diene and

(C12) from 0 to 50 % by weight of a vinylaromatic monomer

and

(C2) from 20 to 50 % by weight of a graft shell obtainable by polymerization of a monomer mixture in the presence of the core (C1), consisting of

(C21) from 40 to 100 % by weight of a $C_1$-$C_8$-alkyl ester of methacrylic or acrylic acid and

(C22) from 0 to 60 % by weight of a vinylaromatic monomer,

having an average particle size $(d_{50})$-C of the graft copolymer (C) of from 25 to 60 nm, and

(D) from 2 to 15 % by weight of a graft copolymer (D) obtainable from

(D1) from 50 to 80 % by weight of a core obtainable by polymerization of a monomer mixture consisting of

(D11) from 50 to 100 % by weight of a 1,3-diene and

(D12) from 0 to 50 % by weight of a vinylaromatic monomer

and

(D2) from 20 to 50 % by weight of a graft shell comprising

(D21) from 40 to 100 % by weight of a $C_1$-$C_8$-alkyl ester of methacrylic or acrylic acid and

(D22) from 0 to 60 % by weight of a vinylaromatic monomer,

having an average particle size $(d_{50})$-D of the graft copolymer (D) of from 90 to 300 nm, and with the further proviso that the ratio of the average particle sizes $(d_{50})$-C to $(d_{50})$-D is kept in the range from 2:1 to 5:1, and

(E) if required, conventional additives in amounts of up to 20 % by weight, based on the sum of the components A, B, C and D, the percentages by weight of A, B, C and D summing to 100 and the difference between the refractive index of the components C and D and that of the mixture of the components A, B and, if required, E being less than 0.005.

2. A thermoplastic molding material as claimed in claim 1, wherein the graft copolymer (C) has an average particle size $(d_{50})$-C of from 30 to 55 nm.

3. A thermoplastic molding material as claimed in claim 1 or 2, wherein the graft copolymer (D) has an average particle size $(d_{50})$-D of from 100 to 250 nm.

4. A thermoplastic molding material as claimed in any of claims 1 to 3, wherein the ratio of the average particle sizes $(d_{50})$-C to $(d_{50})$-D is kept in the range from 3:1 to 5:1.

5. A process for the preparation of a thermoplastic molding material as claimed in any of claims 1 to 4, wherein

(A) from 15 to 70 % by weight of a methacrylate polymer obtainable by polymerization of a mixture consisting of

(A1) from 90 to 100 % by weight, based on (A), of methyl methacrylate and

(A2) from 0 to 10 % by weight, based on (A), of a $C_1$-$C_8$-alkyl ester of acrylic acid and

(B) from 10 to 50 % by weight of a copolymer obtainable by polymerization of a mixture consisting of

(B1) from 78 to 88 % by weight, based on (B), of a vinylaromatic monomer and

(B2) from 12 to 22 % by weight, based on (B), of a vinyl cyanide

and

(C) from 18 to 35 % by weight of a graft copolymer (C) obtainable from

(C1) from 50 to 80 % by weight of a core obtainable by polymerization of a monomer mixture consisting of

(C11) from 50 to 100 % by weight of a 1,3-diene and

(C12) from 0 to 50 % by weight of a vinylaromatic monomer

and

(C2) from 20 to 50 % by weight of a graft shell obtainable by polymerization of a monomer mixture in the presence of the core (C1), consisting of

(C21) from 40 to 100 % by weight of a $C_1$-$C_8$-alkyl ester of methacrylic or acrylic acid and

(C22) from 0 to 60 % by weight of a vinylaromatic monomer,

having an average particle size $(d_{50})$-C of the graft copolymer (C) of from 25 to 60 nm, and

(D) from 2 to 15 % by weight of a graft copolymer (D) obtainable from

(D1) from 50 to 80 % by weight of a core obtainable by polymerization of a monomer mixture consisting of

(D11) from 50 to 100 % by weight of a 1,3-diene and

(D12) from 0 to 50 % by weight of a vinylaromatic monomer

and

(D2) from 20 to 50 % by weight of a graft shell comprising

(D21) from 40 to 100 % by weight of a $C_1$-$C_8$-alkyl ester of methacrylic or acrylic acid and

(D22) from 0 to 60 % by weight of a vinylaromatic monomer,

having an average particle size $(d_{50})$-D of the graft copolymer (D) of from 90 to 300 nm, and with the further proviso that the ratio of the average particle sizes $(d_{50})$-C to $(d_{50})$-D is kept in the range from 2:1 to 5:1, and

(E) if required, conventional additives in amounts of up to 20 % by weight, based on the sum of the components A, B, C and D, the percentages by weight of A, B, C and D summing to 100 and the difference between the refractive index of the components C and D and that of the mixture of the components A, B and, if required, E being less than 0.005, are mixed at from 200 to 300°C.

6. Use of a thermoplastic molding material as claimed in claim 5 for the production of moldings.

7. A molding obtainable by the use as claimed in claim 6.

**Revendications**

1. Masses de moulage thermoplastiques, comprenant un mélange de

(A) 15 à 70 % en poids d'un polymère de méthacrylate, que l'on peut obtenir par polymérisation d'un mélange, constitué de

(A1) 90 à 100 % en poids, par rapport à (A), de méthacrylate de méthyle, et de
(A2) 0 à 10 % en poids, par rapport à (A), d'un ester alkylique en $C_1$-$C_8$ de l'acide acrylique, et de

(B) 10 à 50 % en poids d'un copolymère, que l'on peut obtenir par polymérisation d'un mélange, constitué de

(B1) 78 à 88 % en poids, par rapport à (B), d'un monomère vinylaromatique, et de
(B2) 12 à 22 % en poids, par rapport à (B), d'un cyanure de vinyle, et de

(C) 18 à 35 % en poids d'un copolymère de greffage (C), que l'on peut obtenir à partir de

(C1) 50 à 80 % en poids d'un noyau, qui peut être obtenu par polymérisation d'un mélange de monomères, constitué de

(C11) 50 à 100 % en poids d'un 1,3-diène, et de
(C12) 0 à 50 % en poids d'un monomère vinylaromatique,

et de
(C2) 20 à 50 % en poids d'une enveloppe de greffage qui peut être obtenue par polymérisation d'un mélange de monomères en présence du noyau (C1), constitué de

(C21) 40 à 100 % en poids d'un ester alkylique en $C_1$-$C_8$ de l'acide méthacrylique ou acrylique, et de
(C22) 0 à 60 % en poids d'un monomère vinylaromatique,

avec une dimension moyenne des particules $(d_{50})$-C du copolymère de greffage (C) de 25 à 60 nm, et de

(D) 2 à 15 % en poids d'un copolymère de greffage (D), qui peut être obtenu à partir de

(D1) 50 à 80 % en poids d'un noyau, qui peut être obtenu par polymérisation d'un mélange de monomères, constitué de

(D11) 50 à 100 % en poids d'un 1,3-diène, et de
(D12) 0 à 50 % en poids d'un monomère vinylaromatique,

et de
(D2) 20 à 50 % en poids d'une enveloppe de greffage à base de

(D21) 40 à 100 % en poids d'un ester alkylique en $C_1$-$C_8$ de l'acide méthacrylique ou acrylique, et de
(D22) 0 à 60 % en poids d'un monomère vinylaromatique,

avec une dimension moyenne des particules $(d_{50})$-D du copolymère de greffage (D) de 90 à 300 nm, à la condition supplémentaire que le rapport entre les dimensions moyennes de particules $(d_{50})$-C et $(d_{50})$-D soit maintenu dans la gamme de 2/1 à 5/1, et de (E) éventuellement des additifs courants en des quantités allant jusqu'à 20 % en poids, par rapport à la somme des composants A, B, C et D, les indications en pourcents en poids de A, B, C et D s'additionnant à 100 et la différence entre l'indice de réfraction des composants C et D et celui du mélange des composants A, B et éventuellement E étant inférieure à 0,005.

2. Masses de moulage thermoplastiques suivant la revendication 1, dans lesquelles le copolymère de greffage (C) présente une dimension moyenne des particules $(d_{50})$-C de 30 à 55 nm.

3. Masses de moulage thermoplastiques suivant l'une des revendications 1 et 2, dans lesquelles le copolymère de greffage (D) présente une dimension moyenne des particules $(d_{50})$-D de 100 à 250 nm.

4. Masses de moulage thermoplastiques suivant l'une des revendications 1 à 3, dans lesquelles le rapport entre les dimensions moyennes de particules $(d_{50})$-C et $(d_{50})$-D est maintenu dans la gamme de 3/1 à 5/1.

5. Procédé de préparation de masses de moulage thermoplastiques suivant l'une des revendications 1 à 4, caractérisé en ce qu'on mélange à des températures de l'ordre de 200 à 300°C

(A) 15 à 70 % en poids d'un polymère de méthacrylate, qui peut être obtenu par polymérisation d'un mélange, constitué de

(A1) 90 à 100 % en poids, par rapport à (A), de méthacrylate de méthyle, et de
(A2) 0 à 10 % en poids, par rapport à (A), d'un ester alkylique en $C_1$-$C_8$ de l'acide acrylique, et de

(B) 10 à 50 % en poids d'un copolymère, qui peut être obtenu par polymérisation d'un mélange, constitué de

(B1) 78 à 88 % en poids, par rapport à (B), d'un monomère vinylaromatique, et de
(B2) 12 à 22 % en poids, par rapport à (B), d'un cyanure de vinyle,

et de

(C) 18 à 35 % en poids d'un copolymère de greffage (C), qui peut être obtenu à partir de

(C1) 50 à 80 % en poids d'un noyau, qui peut être obtenu par polymérisation d'un mélange de monomères, constitué de

(C11) 50 à 100 % en poids d'un 1,3-diène et de
(C12) 0 à 50 % en poids d'un monomère vinylaromatique,

et de
(C2) 20 à 50 % en poids d'une enveloppe de greffage, qui peut être obtenue par polymérisation d'un mélange de monomères en présence du noyau (C1), constitué de

(C21) 40 à 100 % en poids d'un ester alkylique en $C_1$-$C_8$ de l'acide méthacrylique ou acrylique, et de
(C22) 0 à 60 % en poids d'un monomère vinylaromatique,

avec une dimension moyenne des particules ($d_{50}$)-C du copolymère de greffage (C) de 25 à 60 nm, et de
(D) 2 à 15 % en poids d'un copolymère de greffage (D), qui peut être obtenu à partir de

(D1) 50 à 80 % en poids d'un noyau, qui peut être obtenu par polymérisation d'un mélange de monomères, constitué de

(D11) 50 à 100 % en poids d'un 1,3-diène et de
(D12) 0 à 50 % en poids d'un monomère vinylaromatique,

et de
(D2) 20 à 50 % en poids d'une enveloppe de greffage à base de

(D21) 40 à 100 % en poids d'un ester alkylique en $C_1$-$C_8$ de l'acide méthacrylique ou acrylique, et de
(D22) 0 à 60 % en poids d'un monomère vinylaromatique,

avec une dimension moyenne des particules ($d_{50}$)-D du copolymère de greffage (D) de 90 à 300 nm et avec la condition supplémentaire que le rapport entre les dimensions moyennes de particules ($d_{50}$)-C et ($d_{50}$)-D soit maintenu dans la gamme de 2/1 à 5/1, et de

(E) éventuellement des additifs courants en des quantités allant jusqu'à 20 % en poids, par rapport à la somme des composants A, B, C et D, les indications en pourcents en poids de A, B, C et D s'additionnant à 100 et la différence entre l'indice de réfraction des composants C et D et celui du mélange des composants A, B et éventuellement E étant inférieure à 0,005.

6. Utilisation des masses de moulage thermoplastiques suivant la revendication 5 pour la préparation de corps moulés.

7. Corps moulés, que l'on peut obtenir par l'utilisation suivant la revendicaton 6.